Europäisches Patentamt

European Patent Office

Office européen des brevets

(19)

(11) **EP 0 763 315 A1**

(12) **DEMANDE DE BREVET EUROPEEN**

(43) Date de publication:
**19.03.1997 Bulletin 1997/12**

(51) Int Cl.6: **A01B 63/111**

(21) Numéro de dépôt: **96401958.2**

(22) Date de dépôt: **13.09.1996**

(84) Etats contractants désignés:
**BE DE ES GB IT**

(30) Priorité: **15.09.1995 FR 9510822**

(71) Demandeur: **RENAULT-AGRICULTURE**
**F-78141 Velizy Villacoublay Cédex (FR)**

(72) Inventeurs:
• **Bauzon, Jacques**
  **92290 Chatenay Malabry (FR)**
• **Gorseth, Stève**
  **Fargo, North Dakota 58103 (US)**

(74) Mandataire: **Fernandez, Francis et al**
**Regie Nationale des Usines Renault,**
**860, Quai de Stalingrad,**
**Service 0267,**
**TPZ 0J2 1.10**
**92109 Boulogne Billancourt Cedex (FR)**

(54) **Procédé et dispositif de contrôle d'un outil semi-porté**

(57) Procédé de contrôle d'un outil de travail au sol semi-porté (13) par un tracteur agricole (1) par l'intermédiaire d'au moins un vérin de relevage hydraulique (3) du tracteur et d'au moins un vérin de correction d'assiette (11) de l'outil servi-porté (13), caractérisé en ce que :

- des positions hautes et basses du relevage du tracteur et les positions correspondantes du vérin (11) de l'outil (13) pour que ce dernier soit parallèle au sol sont mémorisées au cours d'une opération de calibration effectuée sur un sol plan,

- la trajectoire de l'outil (13) lors des entrées de raies de labour est établie selon un premier algorithme (J), tel que le relevage (2) du tracteur est piloté indépendamment de la position du vérin (11) de l'outil (13), et

- la trajectoire de l'outil (13) lors des sorties de raie de labour est établie par un second algorithme (JS), tel que le relevage hydraulique du tracteur (1) et le vérin (3) de l'outil (13) sont pilotés simultanément.

FIG.1

## Description

La présente invention concerne le contrôle en position, en effort et en glissement d'un outil agricole, tel qu'une charrue semi-portée du type attelée derrière un tracteur et supportée par les bras de relevage de celui-ci, tout en disposant d'une ou plusieurs roues d'appui sur le sol, recevant une partie de son poids.

De façon générale, le réglage en hauteur d'un outil semi-porté s'effectue d'une part à son extrémité avant, au moyen du système de relevage hydraulique du tracteur, et d'autre part en un point distinct de son extrémité avant, au moyen d'un vérin hydraulique de correction d'assiette, installé sur l'outil lui-même.

Lorsque le tracteur est équipé d'un système de commande automatique de relevage, permettant d'asservir l'outil à une consigne de position ("pilotage en contrôle de position") à une consigne d'effort de traction ("pilotage en contrôle d'effort") ou de patinage des roues motrices du tracteur ("pilotage en contrôle de glissement"), l'opérateur n'actionne pas directement le relevage, mais agit sur des organes d'asservissement.

Ce type de commande ne dispense cependant pas l'opérateur de régler, à l'aide d'un levier indépendant, la position du vérin de correction d'assiette de l'outil semi-porté. En l'absence de disposition particulière pour la commande de ce vérin, il est donc obligé de manoeuvrer au moins deux organes de commande distincts pour régler un outil semi-porté dans sa position de travail. Dans la pratique, ces manoeuvres présentent une réelle difficulté, aussi bien pour corriger l'assiette de l'outil au milieu d'une raie de labour, que pour déplacer celui-ci entre sa position de travail et sa position de transport, ou de même, à chaque extrémité de raie. De tels réglages sont particulièrement délicats, lorsque l'opérateur a le souci d'optimiser ses manoeuvres, notamment :

- en maintenant toujours l'outil parallèle au sol pendant le travail, au prix de réajustements successifs de son assiette,

- en réduisant au minimum l'écart entre la pénétration dans le sol du premier et du dernier soc dans le sens du déplacement du tracteur, à chaque début et fin de raie,

- en conservant le dernier soc de l'outil le plus longtemps possible dans le sol, à chaque sortie de raie.

Pour faciliter la tâche de l'opérateur, il a déjà été proposé d'équiper un outil semi-porté de capteurs électroniques de position et d'un capteur de déplacement, en vue d'asservir la position du vérin hydraulique de correction d'assiette, à celle du système de relevage du tracteur. Ces dispositions permettent de contrôler automatiquement le vérin hydraulique de correction d'assiette, mais ne prennent en charge aucune intervention directe sur le système de relevage du tracteur. Pour cette raison, elles ne permettent pas de maîtriser entièrement la manoeuvre de l'outil semi-porté, notamment dans les phases d'utilisation de celui-ci nécessitant une commande simultanée de relevage du tracteur et du vérin de correction, par exemple en entrée ou en sortie de raie. Enfin, la mise en oeuvre de ces dispositions implique de prévoir un boîtier de commande spécifique dédié à l'outil, sur le poste de conduite du tracteur, et suppose une compétence particulière de l'opérateur, pour en tirer tout le bénéfice.

Par la publication EP-0 494 516, on connaît un autre système de contrôle de position pour outil semi-porté. Selon cette publication, l'outil contrôlé en position est équipé d'un vérin de correction d'assiette et d'un capteur de position qui contrôle le déplacement de celui-ci. Un panneau de contrôle, disposé dans la cabine du tracteur, permet à l'opérateur de manoeuvrer de façon indépendante ou coordonnée le relevage du tracteur et le vérin de l'outil, de sorte que l'observation directe de l'outil n'est plus nécessaire pendant le travail. En revanche, le système proposé nécessite un réglage sur le terrain, avant chaque nouvelle utilisation, pour adapter le contrôle à la profondeur de travail souhaitée, et à la vitesse de déplacement du tracteur. Dans la pratique, ce réglage est délicat à réaliser, et ne permet pas d'optimiser les manoeuvres en début et en fin de raie.

La présente invention vise à prendre en compte l'ensemble des contraintes propres à la manoeuvre et au contrôle d'un outil agricole semi-porté.

Elle concerne un procédé de contrôle d'un outil de travail au sol semi-porté par un tracteur agricole par l'intermédiaire d'au moins un vérin de relevage hydraulique du tracteur et d'au moins un vérin de correction d'assiette de l'outil semi-porté. Ce procédé est caractérisé en ce que :

- des positions hautes et basses du relevage du tracteur et les positions correspondantes du vérin de l'outil pour que ce dernier soit parallèle au sol sont mémorisées au cours d'une opération de calibration effectuée sur un sol plan,

- la trajectoire de l'outil lors des entrées de raies de labour est établie sans réglage de l'opérateur selon un premier algorithme (J), tel que le relevage du tracteur est piloté indépendamment de la position du vérin de l'outil, et

- la trajectoire de l'outil lors des sorties de raie de labour est établie sans réglage de l'opérateur par un second algorithme (JS), tel que le relevage hydraulique du tracteur et le vérin de l'outil sont pilotés simultanément.

Pour manoeuvrer l'outil, l'opérateur dispose d'un premier commutateur à deux positions, dans lesquelles la position du relevage est asservie respectivement à une valeur représentative de sa position haute, et à une consigne de position de travail imposée par l'opérateur.

Lorsque le relevage est asservi à sa position haute, l'outil est maintenu parallèle au sol.

Le contrôle de l'arrière de l'outil dépend d'une consigne de position particulière. Conformément à l'invention, cette consigne dépend

- de la consigne de position de travail,

- de la distance séparant le point d'attelage de l'outil sur le tracteur de l'axe des roues d'appui de l'outil sur le sol,

- de la distance séparant le dernier organe de travail de l'outil à l'axe des raies d'appui sur le sol,

- de la distance parcourue par le premier soc organe de travail de l'outil.

L'invention prévoit notamment que l'arrière de l'outil descend en fonction de la valeur de la distance parcourue selon une trajectoire minimisant l'écart entre le premier et le dernier organes de travail dans le sens du déplacement, et qu'il remonte selon une trajectoire maintenant son dernier outil de travail le plus longtemps possible dans le sol, tout en minimisant l'écart entre le premier et le dernier organe de travail.

Selon une autre caractéristique de l'invention, l'opérateur a la possibilité de modifier l'inclinaison de l'outil, indépendamment de la position des bras de relevage.

L'invention concerne également un dispositif de contrôle d'un outil semi-porté. Ce dispositif est caractérisé en ce qu'il comporte

- un capteur de position de vérin de relevage et un capteur de position du vérin de l'outil semi-porté,
- un circuit de commande hydraulique des vérins et
- un boîtier de commande dudit circuit hydraulique muni d'un commutateur manuel, présentant extérieurement
- un premier commutateur à deux positions,
- des moyens de commande de la consigne de position
- des moyens de commande de la consigne de correction d'assiette
- des moyens de commande du contrôle simultané en effort et en position, et
- des moyens de commande directe du vérin de l'outil semi-porté.

D'autres caractéristiques et avantages de l'invention apparaîtront clairement à la lecture de la description suivante d'un mode de réalisation particulier de celle-ci, en liaison avec les dessins sur lesquels :

- la figure 1 illustre l'implantation du dispositif proposé par l'invention sur un tracteur agricole,

- la figure 2 représente le boîtier de commande de ce dispositif,

- la figure 3 se rapporte au synoptique du boîtier de commande, et

- la figure 4 illustre le traitement des signaux effectué dans ce boîtier.

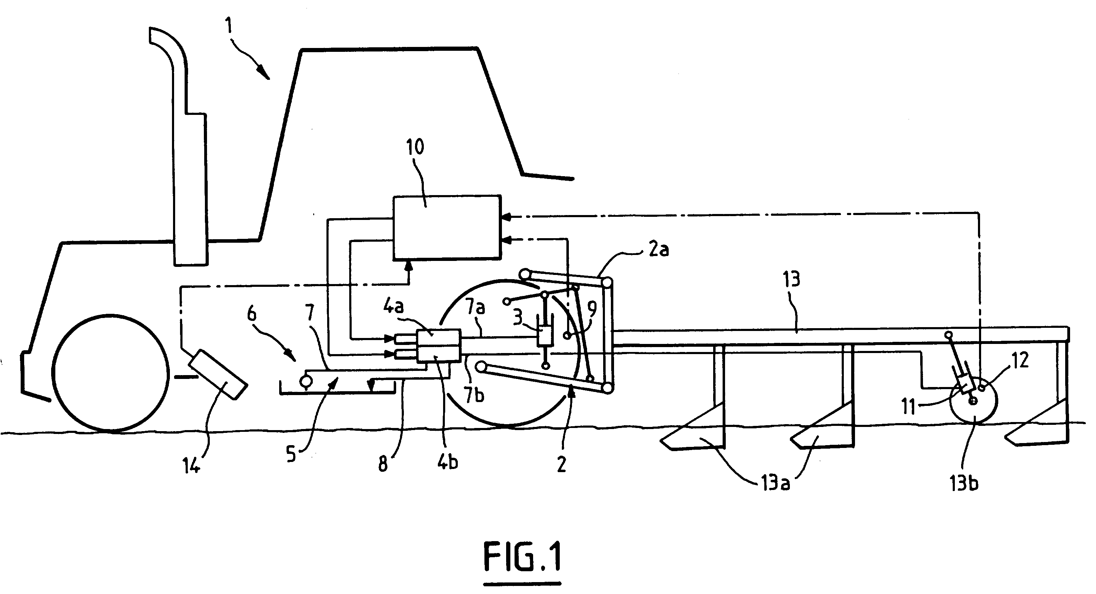

Le tracteur agricole 1 de la figure 1 est muni de deux bras de relevage arrière 2, dont un seul est représenté, et d'une barre d'attelage supérieure 2a, supportant un outil semi-porté 13, tel qu'une charrue 13 à plusieurs socs 13a, disposant d'une roue d'appui au sol, ou roue de support 13b. De façon classique, les bras de relevage 2 sont déplaçables sur le haut ou vers le bas, sous l'action d'au moins un vérin hydraulique 3 alimenté en fluide de pression par une conduite 7a, placée sous le contrôle d'une première valve électrohydraulique 4a. La charrue semi-portée 13 est également équipée d'un vérin hydraulique 11, ou vérin de correction d'assiette, alimenté en fluide de pression par une conduite 7b placée sous le contrôle d'une seconde valve électrohydraulique 4b. Les valves 4a et 4b sont elles-mêmes alimentées en fluide de pression à partir d'une bâche 5, par l'intermédiaire d'une pompe hydraulique 6 entraînée par le moteur du tracteur. Le circuit hydraulique comporte à cet effet une conduite d'alimentation 7 des électrovannes 4a, 4b et une conduite de retour à la bâche 8, permettant de vidanger les vérins 3, 11. La position des bras d'attelage 2 est repérée par un premier capteur de position 9 relié à un boîtier de commande 10, tandis que celle du vérin de correction 11 est repérée par un second capteur de position 12. Les capteurs 9, 12 sont reliés à un boîtier de commande 10 capable d'activer les électrovannes 4a, 4b par des courants de commande adaptés à la stratégie appliquée. Enfin un capteur supplémentaire 14, tel qu'un radar, complète les informations transmises au boîtier de commande 10 par l'indication de la vitesse de déplacement Vr du tracteur 1 par rapport au sol.

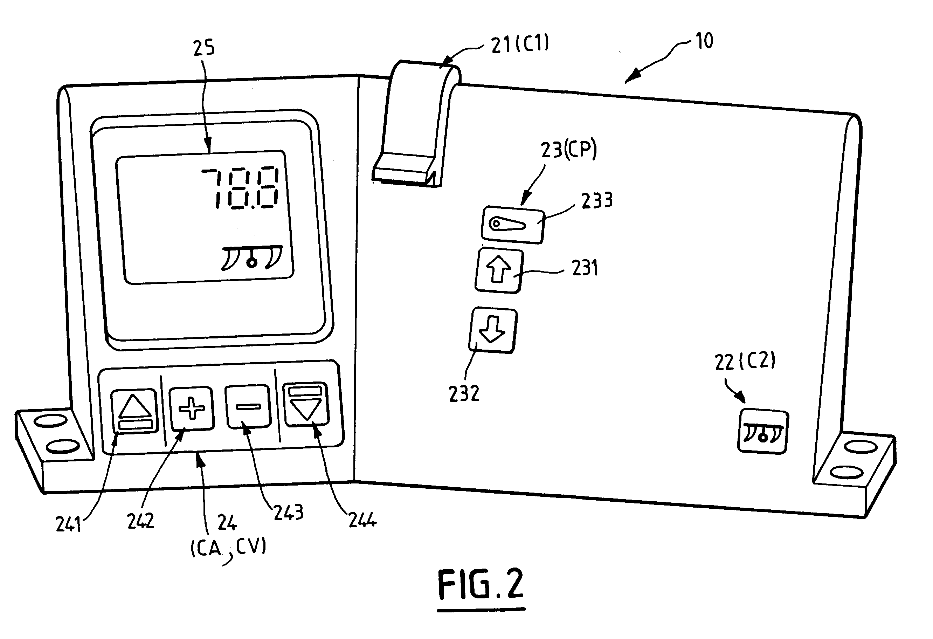

Le boîtier de commande 10 de la figure 2, est un exemple non limitatif d'interface permettant à un opérateur de contrôler de l'intérieur du tracteur l'outil semi-porté 13, conformément à l'invention. Sur le boîtier 10, on distingue un commutateur à deux positions 21, une touche déportée 22 et deux ensembles des touches 23 et 24.

Le premier commutateur 21, C1, peut basculer sous l'action de l'opérateur entre une première position ou position de travail, dans laquelle les bras de relevage 2 sont asservis à une consigne de position établie par l'opérateur, et une seconde position, ou position de butée haute, dans laquelle l'outil rejoint impérativement sa position de transport.

Un premier ensemble de touches 23 permet à l'opérateur de modifier la consigne de position CP des bras de relevage 2 à l'aide de l'une ou l'autre des touches 231 et 232, disposées à proximité d'un pictogramme 233, représentant un bras de relevage. La consigne de position est alors affichée en temps réel sur l'écran 25.

Un second ensemble de touches 24 permet d'une part de modifier la consigne de correction d'assiette CA appliquée à l'outil semi-porté 13 pour incliner celui-ci, lorsqu'il est piloté parallèlement à lui-même en contrôle de position, d'effort ou de glissement par le boîtier 10, et d'autre part de mettre en oeuvre une commande de déplacement directe du vérin 11, quelque soit le mode de fonctionnement du boîtier. Les deux touches 242 et 243 sont affectées à la modification de la consigne de correction d'assiette CA, ou de commande directe en position CV de l'outil 13 tandis que les touches 241 et 242 permettent d'imposer les modifications souhaitées au système. On peut par exemple prévoir qu'un premier appui sur la touche 241 après utilisation des touches 242 ou 243 entraîne l'affichage sur l'écran 25 d'une nouvelle consigne de correction d'assiette CA, tandis qu'un appui sur la quatrième touche 244 de l'ensemble 24 déclenche l'application directe d'une consigne de déplacement CV, sur le vérin 11, après appui sur les touches 242 ou 243.

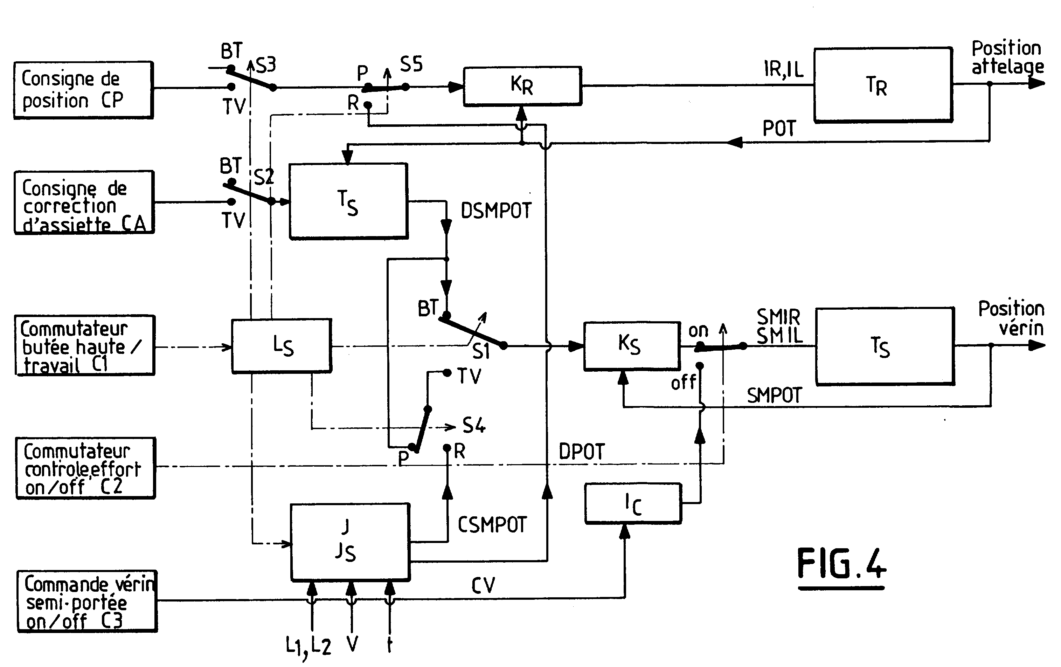

Enfin, la touche 22 commande un second commutateur de contrôle C2 (cf figure 4) qui autorise ou non le boîtier 10 à piloter l'avant de l'outil 13 (bras de relevage 2) et le vérin 11 simultanément en contrôle d'effort ou de glissement. Ce mode de fonctionnement peut notamment être signalé à l'opérateur par affichage sur l'écran 25, d'un pictogramme identique à celui du bouton 22.

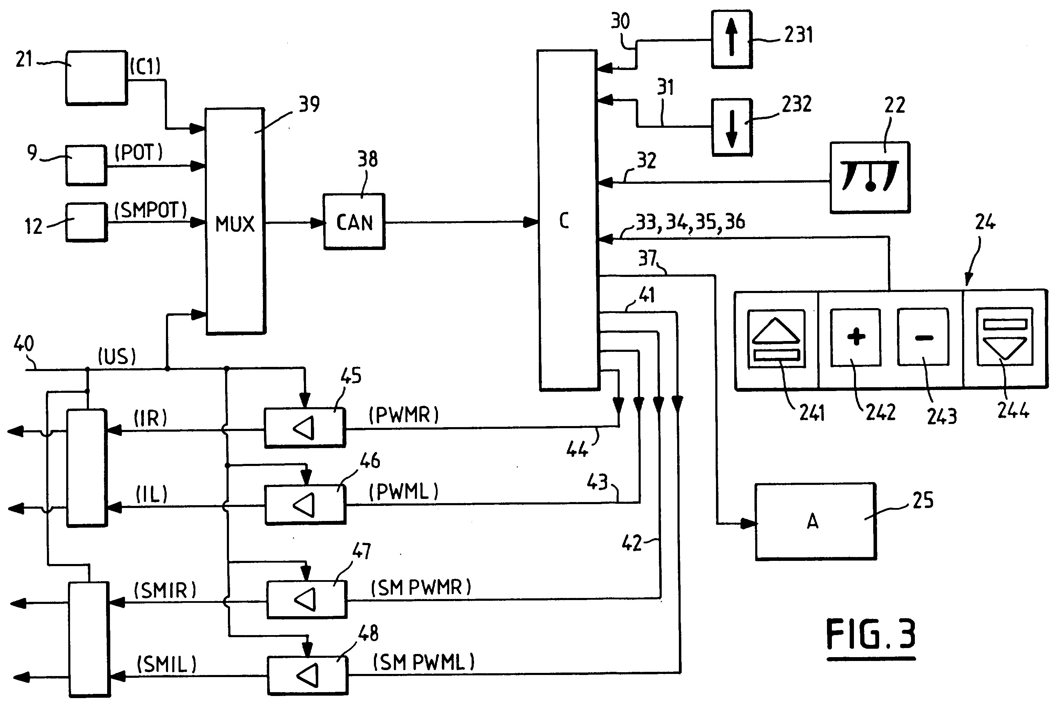

Sur la figure 3, on a regroupé les principaux éléments de commande nécessaires à la mise en oeuvre de l'invention. Les éléments peuvent par exemple être regroupés dans un boîtier 10 tel que celui de la figure 2, mais on peut bien entendu envisager d'autres types d'interfaces, sans sortir du cadre de l'invention.

Le microprocesseur 49 mentionné sur la figure 3 possède 7 entrées logiques, référencées de 30 à 36, correspondant respectivement à l'état des touches 231 et 232, à celui de la touche 22 et à celui des touches 241 à 244. Il présente une sortie en direction de l'afficheur 25. De façon classique, un convertisseur analogique-numérique CAN 38, relié à un multiplexeur MUX 39, convertit séquentiellement les signaux de position respectifs POT et SMPOT des bras de relevage 2 et du vérin 11 transmis par les capteurs 9 et 12, ainsi que le signal transmis par un potentiomètre (non représenté) relevant la position du premier commutateur C1 21. Le multiplexeur 39 reçoit également la tension d'alimentation 40 des solénoïdes des deux électrovannes 4a, 4b utilisées pour piloter les vérins 3 et 11. L'ensemble de ces signaux pourra par exemple être échantillonné à une fréquence de 250 Hz, d'autres valeurs de fréquence convenant également, pour autant qu'elles soient suffisamment élevées au regard de la réponse en boucle fermée du relevage. La valeur numérique du signal de position POT du vérin de relevage 3 sera avantageusement normalisée par rapport à une valeur maximale représentative de la position la plus haute du relevage 2 après étalonnage, et la valeur numérique du signal de position du vérin 11 sera normalisée, par rapport à une tension de référence spécifique obtenue après étalonnage. Enfin, le microprocesseur 49 possède quatre sorties logiques générant des signaux impulsionnels à modulation de largeur d'impulsion, notés PWMR, PWML, SMPWMR et SMPWML. Les signaux impulsionnels 41 à 44 sont traités par les amplificateurs 45 à 48 pour engendrer des signaux de commande IL, IR, SMIR, SMIL, des électrovannes 4a et 4b entraînant respectivement un soulèvement et un abaissement de l'outil 13 par les vérins de relevage 3 et par son propre vérin 11.

La partie gauche de la figure 4 regroupe les consignes introduites par l'utilisateur dans le boîtier 20 par l'utilisateur, soit

- la consigne de position CP des bras de relevage

- la consigne de correction d'assiette CA de l'outil semi-porté,

- la consigne de déplacement de l'outil vers sa position de butée haute ou vers sa position de travail, imposée par le premier commutateur C1

- la consigne de pilotage en contrôle de position, d'effort ou de glissement, imposée par le second commutateur C2, et

- la consigne de pilotage direct CV du vérin 11, imposée par un troisième commutateur C3.

Le premier commutateur C1, possédant deux états notés "butée haute" BT et position de travail TV, pilote cinq interrupteurs, notés S1 à S5 sur le schéma, à travers un circuit de logique séquentielle (LS) validant l'un ou l'autre de deux algorithmes (J) et (JS) selon la phase de travail. Le second et le troisième commutateurs C2 possèdent deux états ON et OFF.

Les deux correcteurs Kr et Ks sont des correcteurs du type P.I.D. (Proportionnel Intégral Dérivé) pilotant en boucle fermée, les positions respectives des bras de relevage 2 et du vérin de l'outil 11, en fonction de transferts notés Tr et Ts et du cahier des charges du système. Le premier transfert Tr représente la relation qui existe entre les courants de commande IR et IL du relevage 2 et le signal de position résultante POT fourni par le capteur 9, tandis que le second transfert Ts associe les courants de commande SMIR et SMIL et le signal de position résultant SMPOT transmis par le capteur 12. Les transferts Tr et Ts sont donc parties intégrantes de deux boucles d'asservissement en position, par l'intermédiaire des correcteurs Kr et Ks associés respectivement aux signaux POT et SMPOT.

La consigne de position gérée par le correcteur Kr est la consigne CP établie par l'opérateur à l'aide de l'ensemble de touches 23 de la figure 2. Le signal de retour POT du capteur 9, qui sert à estimer un écart en position par le premier correcteur Kr est également transformé en signal de commande du vérin 11 DSMPOT, par un troisième transfert Tf.

Le transfert Tf est élaboré préalablement à l'utilisation de l'outil, au cours d'une procédure d'étalonnage en position de l'outil appelée "phase de calibration", effectuée sur un sol plan. Pendant cette procédure, l'outil est positionné au niveau du sol, sans contact effectif avec celui-ci. Les valeurs correspondantes LDC et SDC des signaux POT et SMPOT sont alors mémorisées par le microcalculateur 39, par exemple en appuyant simultanément sur les touches 242 et 243.

L'outil est ensuite positionné de façon parallèle au sol, à la hauteur la plus grande autorisée par les bras de relevage 2 ou le vérin 11. Les valeurs correspondantes LUC et SUC des signaux POT et SMPOT peuvent alors être mémorisées par un nouvel appui simultané sur les touches 242 et 243.

Conformément à l'invention, le signal DSMPOT peut par exemple être calculé par le transfert Tf selon la relation suivante

$$DMSPOT = \frac{(SUC - SDC) \, (POT\text{-}LDC)}{(LUC\text{-}LDC)} + SDC + ADJ \qquad (R1)$$

où ADJ est le signal associé à la correction d'assiette CA établie par l'opérateur à l'aide des touches 242 et 243.

Lorsque la hauteur par rapport au sol des extrémités de l'outil 11 et les signaux POT et SMPOT sont liés par une relation linéaire, l'outil peut être déplacé parallèlement au sol en donnant à ADJ une valeur nulle, et en asservissant directement le signal SMPOT au signal DSMPOT, qui devient la consigne pour la boucle associée au correcteur Ks et au transfert Ts. Si en revanche l'opérateur introduit une consigne de correction d'assiette CA non nulle, le signal ADJ a une valeur différente du zéro et l'outil se déplacera parallèlement à lui-même, sans être parallèle au sol.

Le premier algorithme J mentionné plus haut, est utilisé pendant les entrées de raies. Il permet de déterminer la valeur de la consigne de position CSMPOT à appliquer à l'entrée du second correcteur Ks, et à laquelle est asservi le vérin 11, par l'intermédiaire du signal SMPOT. Cette valeur est transmise au correcteur Ks quand le premier interrupteur S1 est en position TV et le quatrième interrupteur S4 en position R (cf. fig. 4). La valeur de la consigne CSMPOT peut par exemple être calculée en temps réel selon la relation :

$$CSMPOT = (SDC - SWDP) \times \frac{L1}{D + Do} + SWDP + ADJ \qquad (R2)$$

dans laquelle :

- L1 est la distance séparant les crochets d'attelage de l'axe des roues d'appui 13b,

- D représente la distance parcourue par le premier organe de travail du sol 13a de l'outil lors de l'entrée dans le sol ; D est évaluée par intégration de la vitesse du tracteur Vr, suivant la relation D = Vr x t, en étant limitée à la valeur L1 + L2, somme de la distance L1 définie ci-dessus, et de la distance L2 séparant l'axe des roues d'appui 13b, du dernier organe de travail de l'outil,

- Do est une constante permettant d'éviter que CSMPOT tende vers l'infini quand t = O, au début de l'entrée de l'outil 13 dans le sol et

- SWDP est calculé par la relation

$$SWDP = \frac{(SUC - SDC)}{(LUC-LDC)} \times (LWDP - LDC) + SDC + ADJ$$

dans laquelle LWDP représente la consigne de position associée au correcteur Kr, générée par la consigne CP pendant les entrées de raie.

Le second algorithme JS est utilisé lors des sorties de raies. Il détermine les valeurs de consigne DPOT et CSMPOT utilisées par les correcteurs Kr et Ks pour asservir respectivement les valeurs POT et SMPOT en sortie de raie. Chaque consigne peut être le résultat de calculs effectués séquentiellement suivant les relations suivantes :

$$DPOT = \frac{(LDC - LWDP)\ (L1 + L2)}{(L1 + L2 - D)} + LWDP \qquad (R3)$$

$$DPOT = LWUP - EXHO \qquad (R4)$$

$$CSMPOT = \frac{(DSMPOT - SDC)\ (-L1)}{D} + SCLP + ADJ \qquad (R5)$$

$$CSMPOT = \frac{(DSMPOT - SWDP)\ L1}{(L1 + L2)} + SWDP + ADJ \qquad (R6)$$

où

- D représente la distance parcourue par le premier organe de travail au moment de la sortie de raie, évaluée par intégration du signal Vr selon la relation $D = Vr_{*}t$, et limitée à la valeur $L1 + L2$.

- LWUP est la valeur de la consigne représentative de la position du relevage en butée haute, gérée par le premier correcteur Kr, et

- EXHO est une constante qui limite la valeur de DPOT de telle sorte que le relevage soit positionné à une hauteur plus basse que la butée haute en sortie de raie.

Le dispositif et la stratégie qui viennent d'être décrits permettent de contrôler un outil semi-porté de la façon suivante. A l'entrée d'une raie de labour, le premier commutateur C1 étant en position BT, l'outil est relevé dans sa position la plus haute. Dans cette situation, les interrupteurs S1, S2 et S3 de la figure 4 sont en position BT. La valeur du signal de position du relevage est alors asservie à la valeur LWUP, représentative de sa position haute. Le transfert Tf convertit alors le signal POT en un signal DSMPOT, constituant la consigne que doit suivre le signal SMPOT en position haute de l'outil. Dans cette situation, la valeur de ADJ est nulle, et l'outil 13 est parallèle au sol.

Après basculement du premier commutateur C1 en position TV, les trois interrupteurs S1, S2, S3 rejoignent leur position TV, tandis que les interrupteurs S4 et S5 passent en position R.

Le paramètre D est alors initialisé à une valeur nulle (D = O), et le signal POT du capteur de position 9 est asservi à la consigne DPOT, dont la valeur est égale à la position du travail désirée par l'opérateur, LWDP. L'avant de l'outil descend alors pour rejoindre la position correspondante, de la même façon qu'un outil sans roue d'appui sur le sol.

Le signal SMPOT étant asservi à la valeur de la consigne CSMPOT établie selon la relation R2, l'arrière de l'outil 13 descend en fonction de l'évolution du paramètre D, qui dépend de la vitesse réelle du tracteur Vr et du temps t. La trajectoire ainsi décrite par l'arrière de l'outil est telle qu'elle minimise l'écart de distance entre le premier et le dernier outil semi-porté. Quand $D = L1 + L2$, les interrupteurs S4 et S5 passent à l'état P. L'algorithme J n'est plus opérationnel.

Lorsque l'outil 13 a rejoint sa position de travail, et tout au long de la raie de labour, il se déplace parallèlement à lui-même. Le signal POT issu du capteur de position 9 du relevage 2 reste asservi à la valeur LWDP. Comme indiqué plus haut, ce même signal est traité par le troisième transfert Ts pour générer la consigne DSMPOT, selon l'équation (R1) à laquelle est asservi le signal SMPOT issu du capteur 12. L'outil 13 peut ainsi se déplacer parallèlement à lui-même, tandis que l'opérateur peut modifier son inclinaison par rapport au sol en ajustant la variable ADJ au moyen de la consigne de correction d'assiette CA.

Arrivé en fin de raie, l'opérateur bascule le premier commutateur C1 en position BT, entraînant ainsi la sortie de l'outil 13 hors du sol. Cette opération peut être décomposée en quatre phases.

Dans une première phase $\varphi_1$, les interrupteurs S2 et S3 rejoignent leur position BT et les interrupteurs S4 et S5 basculent en position R, tandis que le premier interrupteur S1 reste en position TV. Le signal POT du capteur de position d'attelage est alors asservi à la consigne DPOT dont la valeur est égale à la "référence sol" LDC, mesurée pendant la phase de calibration. Le relevage 2 rejoint alors une position représentative du niveau du sol estimé au cours de cette phase de calibration. Le signal SMPOT est asservi à la valeur de consigne CSMOP suivant l'équation (R6) dans l'algorithme JS. Dans cette équation, DSMPOT représente la position instantanée du relevage que doit suivre l'outil semi-porté 13. Cette phase est terminée quand POT = DPOT.

A l'issue de la deuxième phase $\varphi_2$, le paramètre de distance D est initialisé à sa valeur nulle, D = O. Le signal POT du capteur 12 est alors asservi à la consigne DPOT dont la valeur évolue en fonction de la vitesse Vr et du temps t selon la relation (R3). L'augmentation de la valeur de consigne DPOT se traduit par un soulèvement jusqu'à la valeur DPOT = LWUP - EXHO (cf relation R4). L'avant de l'outil est alors positionné plus bas que la valeur maximale LWUP obtenue pendant la calibration de l'engin.

L'écart en hauteur est représenté par la donnée EXHO, qui est un paramètre variable dépendant du débit maximum de la pompe hydraulique 6. Au cours de cette seconde phase $\varphi_2$, le vérin 11 est asservi en position par la consigne CSMPOT dont la valeur est définie par la relation R6 de la même façon que pendant la première phase $\varphi_1$. La seconde phase $\varphi_2$ est terminée quand DPOT = LWUP - EXHO.

Au cours de la troisième phase $\varphi_3$ de la sortie de raie, le signal DPOT est maintenu à la valeur maximale atteinte pendant la seconde phase $\varphi_2$. La consigne CSMPOT évolue en fonction de l'équation (R5), dont l'un des paramètres est D, initialisé au cours de la seconde phase $\varphi_2$. La phase $\varphi_3$ est terminée quand D = L1 + L2.

Le premier interrupteur S1 passe alors en position BT, tandis que les interrupteurs S4 et S5 basculent en position P.

Au cours de cette quatrième phase $\varphi_4$, le signal POT est asservi à la valeur LWUP, représentative de l'élévation maximale du relevage. Le troisième transfert Tf génère à partir du signal POT, le signal DSMPOT, qui est la consigne d'asservissement du signal SMPOT ; l'outil 13 évolue alors vers la position la plus haute repérée en phase de calibration. Quand POT = LWUP et SMPOT = DSMPOT, la quatrième phase $\varphi_4$ est terminée.

Conformément à l'invention, il est également possible de piloter le vérin de l'outil semi-porté, après que le commutateur $C_2$ ait été basculé en position OFF grâce à la commande directe CV, activée en appuyant sur la touche 244. Dans cette situation la commande directe du vérin 11 (cf figure 4) permet de générer des courants de commande SMIR et SMIL par l'intermédiaire du quatrième transfert Ic, afin de positionner le vérin 11 dans une position quelconque.

La commande CV, est utilisée notamment, pendant la phase dite de calibration, pour placer l'outil parallèlement au sol, indépendamment de la commande CP qui pilote alors uniquement le relevage du tracteur. Elle peut bien entendu être aussi utilisée à tout moment lorsque $C_2$ est en position OFF pour placer l'arrière de l'outil 13 dans une position quelconque.

En conclusion, l'invention permet de supprimer le réglage de l'arrière d'un outil semi-porté en cours de travail et à l'occasion de chaque nouvelle entrée ou sortie de raie de labour. Le dispositif de pilotage proposé présente l'avantage d'être opérationnel après une opération de calibration permettant de relever les valeurs LDC, SDC, LUC, SUC mentionnés dans la description, qui peut-être réalisée avant son utilisation sur le terrain. Enfin il faut noter que grâce à l'invention, le pilotage d'un outil semi-porté, s'effectue de la même façon que pour un outil porté alors qu'il prend automatiquement en considération les contraintes propres à l'utilisation d'un outil semi-porté, telles que :

- le déplacement des socs parallèlement au sol en contrôle de position d'effort ou de glissement, avec possibilité de correction d'assiette,

- la réduction de la distance séparant l'entrée du premier et du dernier soc dans le sens du déplacement à chaque début ou fin de raie, et

- le maintien du dernier soc le plus longtemps possible dans le sol, en sortie de raie.

**Revendications**

1. Procédé de contrôle d'un outil de travail au sol semi-porté (13) par un tracteur agricole (1) par l'intermédiaire d'au moins un vérin de relevage hydraulique (3) du tracteur et d'au moins un vérin de correction d'assiette (11) de l'outil semi-porté (13), caractérisé en ce que :

- des positions hautes et basses du relevage du tracteur et les positions correspondantes du vérin (11) de l'outil (13) pour que ce dernier soit parallèle au sol sont mémorisées au cours d'une opération de calibration effectuée sur un sol plan,

- la trajectoire de l'outil (13) lors des entrées de raies de labour est établie sans réglage de l'opérateur selon un premier algorithme (J) tel que le relevage (2) du tracteur est piloté indépendamment de la position du vérin (11) de l'outil (13), et

- la trajectoire de l'outil (13) lors des sorties de raie de labour est établie sans réglage de l'opérateur par un second algorithme (JS) tel le que le relevage hydraulique du tracteur (1) et le vérin (3) de l'outil (13) sont pilotés simultanément.

2. Procédé de contrôle selon la revendication 1, caractérisé en ce que l'opérateur dispose d'un premier commutateur C1 (21) à deux positions, dans lesquelles la position POT du relevage (2) est assurée respectivement à une valeur LWUP représentative de sa position haute, et à une consigne de position de travail LWDP imposée par l'opérateur.

3. Procédé de contrôle selon la revendication 2, caractérisé en ce que lorsque le relevage (2) est asservi à sa position haute, l'outil est parallèle au sol.

4. Procédé de contrôle selon la revendication 2 ou 3, caractérisé en ce que lorsque le premier commutateur C1 (2) est placé en position de travail, la position SMPOT de l'arrière de l'outil est asservie à une valeur de consigne CSMPOT dépendant,

- de LWDP

- de la distance L1 séparant le point d'attelage de l'outil (13) sur le tracteur de l'axe des roues d'appui (13b) de l'outil (13) sur le sol,

- de la distance L2 séparant le dernier organe de travail (13a) de l'outil (13), de l'axe des roues d'appui sur le sol, et

- de la distance D parcourue par le premier soc organe de travail 13a de l'outil.

5. Procédé de contrôle selon la revendication 4, caractérisé en ce que l'arrière de l'outil descend en début de raie en fonction de la valeur de la distance parcourue selon une trajectoire minimisant l'écart entre le premier et le dernier organe de travail (13a) dans le sens du déplacement.

6. Procédé de contrôle selon la revendication 4 ou 5, caractérisé en ce que lorsque l'arrière de l'outil (13) a rejoint sa position de travail, la position POT du relevage est asservi à LWDP et la consigne de position CSMPOT de l'arrière de l'outil est ajustée en fonction d'une éventuelle consigne de correction d'assiette (CA) imposée par l'opérateur.

7. Procédé de contrôle selon la revendication 4, 5 ou 6, caractérisé en ce que lors du basculement du premier commutateur C1 (21) dans sa position haute en fin de raie l'avant de l'outil (13) rejoint dans un premier temps une position représentative du niveau du sol LDC mesurée pendant l'opération de calibration du sol tandis que SMPOT évolue selon une trajectoire définie par le second algorithme (JS).

8. Procédé de contrôle selon la revendication 7, caractérisé en ce que lorsque l'avant de l'outil a atteint la position LDC, sa consigne de position DPOT évolue en fonction du temps et de la vitesse Vr du tracteur jusqu'à une hauteur LWUP - EXHO inférieure à sa consigne de position haute LWUP, tandis que l'arrière de l'outil évolue selon la même trajectoire.

9. Procédé de contrôle selon la revendication 8, caractérisé en ce que lorsque DPOT = LWUP - EXHO, la consigne CSMPOT de l'arrière de l'outil (13) évolue en fonction de la distance D parcourue, jusqu'à ce que D = L1 + L2.

10. Procédé de contrôle selon la revendication 9, caractérisé en ce lorsque D = L1 + L2 la position du relevage (2) est asservie à LWUP et l'arrière de l'outil rejoint la consigne de position correspondante repérée au cours de l'opération de calibration.

11. Procédé de contrôle selon l'une des revendications précédentes, caractérisé en ce que l'opérateur dispose d'un second commutateur $C_2$ à deux positions autorisant respectivement un pilotage simultané de l'avant de l'outil (13) et du vérin (11) en contrôle de position, d'effort et de glissement ou un pilotage exclusif en position du vérin (11).

**12.** Procédé de contrôle selon l'une des revendications précédentes, caractérisé en ce que l'opérateur a la possibilité de modifier l'inclinaison de l'outil (13), indépendamment de la position des bras de relevage (2).

**13.** Dispositif de contrôle pour la mise en oeuvre d'un procédé conforme à l'une des revendications précédentes, caractérisé en ce qu'il comporte :

- un capteur de position (9) de vérin de relevage (3) et un capteur de position du vérin (11) de l'outil semi-porté (13),
- un circuit de commande hydraulique 5, 6, 7, 4a, 4b, 7a, 7b, 8) des vérins 11, 13,
- un boîtier de commande (10) dudit circuit hydraulique muni d'un commutateur manuel, présentant extérieurement,
- le premier commutateur C1 (21) à deux positions,
- des moyens de commande (23) de la consigne de position (CP),
- des moyens de commande (24) de la consigne de correction d'assiette (CA),
- des moyens de commande (22) du contrôle simultané en effort et en position, et
- des moyens de commande directe (CV) du vérin (11) de l'outil semi-porté (13).

**14.** Dispositif de contrôle selon la revendication 13, caractérisé en ce que le boîtier de commande (10) renferme une boucle d'asservissement de la consigne de position POT du relevage (2), une boucle d'asservissement de la consigne de position SMPOT du vérin (11) de l'outil (13), et un circuit de logique séquentielle (LS) permettant au premier commutateur C1 (21) de piloter un ensemble d'interrupteurs (Si) et validant les algorithmes (J) et (JS) en fonction de la phase de travail.

FIG.1

FIG.2

FIG.3

EP 0 763 315 A1

FIG.4

Consigne de position CP

Consigne de correction d'assiette CA

Commutateur butée haute / travail C1

Commutateur controle.effort on/off C2

Commande vérin semi·portée on/off C3

BT S3 TV
P S5 R
$K_R$
IR,IL
$T_R$
Position attelage
POT

BT S2 TV
$T_S$
DSMPOT
BT S1
TV S4 P R
$L_S$
$K_S$
on SMIR SMIL off
$T_S$
Position vérin
SMPOT
DPOT
$I_C$
J $J_S$
CSMPOT
CV

$L_1, L_2$ V t

EP 0 763 315 A1

Office européen
des brevets

# RAPPORT DE RECHERCHE EUROPEENNE

Numero de la demande

EP 96 40 1958 ·2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X,D | EP-A-0 494 516 (MASSEY-FERGUSON) <br> * abrégé; figures * <br> * colonne 7, ligne 42 - ligne 55 * <br> * colonne 8, ligne 35 - colonne 9, ligne 43 * <br> * colonne 10, ligne 47 - ligne 54 * <br> --- | 1-14 | A01B63/111 |
| A | DE-A-35 22 823 (BOSCH) <br> * abrégé; figures * <br> ----- | 1 | |

|  |
|---|
| **DOMAINES TECHNIQUES RECHERCHES (Int.Cl.6)** |
| A01B |

Le présent rapport a été établi pour toutes les revendications

| Lieu de la recherche | Date d'achèvement de la recherche | Examinateur |
|---|---|---|
| LA HAYE | 27 Décembre 1996 | Walvoort, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)